# EUROPÄISCHE PATENTSCHRIFT

(11) **EP 3 500 776 B1**
(45) Veröffentlichungstag und Bekanntmachung des Hinweises auf die Patenterteilung: **02.12.2020**
(21) Anmeldenummer: 18746868.1
(22) Anmeldetag: 19.07.2018
(51) Int. Cl.: F16H 25/20

(54) **SPINDELANTRIEB MIT ÜBERLASTKUPPLUNG**
SPINDLE DRIVE HAVING AN OVERLOAD CLUTCH
MÉCANISME D'ENTRAÎNEMENT À BROCHE AYANT UN EMBRAYAGE DE SURCHARGE

(30) Priorität: 19.07.2017 DE 102017116271
(43) Veröffentlichungstag der Anmeldung: 26.06.2019
(73) Patentinhaber: Gebr. Schmidt Fabrik für Feinmechanik GmbH & Co. KG, 78112 St. Georgen (DE)
(72) Erfinder: MEYER, Andreas Leo, 78120 Furtwangen (DE); NEFF, Thomas, 78052 Villingen-Schwenningen (DE)
(74) Vertreter: Witte, Weller & Partner Patentanwälte mbB
(86) Internationale Anmeldenummer: PCT/EP2018/069666
(87) Internationale Veröffentlichungsnummer: WO 2019/016329

(56) Entgegenhaltungen:
- WO-A1-2004/113707
- WO-A1-2005/016636
- DE-A1-102006 036 961
- DE-U1-202014 103 629
- US-A- 2 701 478
- US-B1- 6 453 761

## Beschreibung

Die vorliegende Erfindung betrifft gemäß Oberbegriff des Anspruchs 1 eine Presse, insbesondere eine Elektropresse, mit einem Motor, einem Spindelantrieb, der eine Spindel und eine auf der Spindel angeordnete Spindelmutter aufweist, und einem Gehäuse, welches die Spindelmutter umgibt. Derartige Pressen werden vorwiegend als Fügepressen eingesetzt.

Eine Presse gemäß Oberbegriff des Anspruchs 1 ist bereits aus der WO 2005/016636 A1 oder der DE 103 33 416 B3 bekannt.

Spindelantriebe dienen im Wesentlichen dazu, eine von einem Motor (meist Elektromotor) erzeugte Rotationsbewegung in eine Linearbewegung mit hoher Kraftentwicklung umzusetzen. Sie weisen eine Spindel, welche häufig auch als Gewindespindel bezeichnet wird, sowie eine auf der Spindel montierte Spindelmutter auf. Je nach Ausführung des Spindelantriebs sind Spindel und Spindelmutter über eines oder mehrere Gewinde, eines oder mehrere Kugel- oder Wälzlager oder ein Planetengetriebe miteinander verbunden und dementsprechend relativ zueinander beweglich. Beispielhafte Spindelantriebe sind aus der WO 2004/113707 A1, der US 2,701,478 A, der DE 20 2014 103629 U1 und der US 6,453,761 B1 bekannt.

Bei Trapezgewindespindeln oder Gleitspindeln weisen Spindelmutter und Spindel jeweils zumindest einen Gewindegang auf. Die Kraftübertragung zwischen Spindel und Spindelmutter findet direkt über die Flanken der Gewindegänge in Form von Gleitreibung statt.

Bei Kugelrollspindeln erfolgt die Kraftübertragung zwischen Spindel und Spindelmutter über eine Vielzahl von Kugeln, welche zwischen Spindel und Spindelmutter abrollen.

Bei Rollengewindetrieben, welche eine weitere bekannte Art von Spindelantrieben bilden, erfolgt die Kraftübertragung zwischen Spindel und Spindelmutter mithilfe von Pianetenwälzkörpern, welche sich zwischen Spindel und Spindelmutter abwälzen. Planetenwälzkörper verfügen über eine hohe Steifigkeit und eignen sich besonders für die Übertragung hoher Axialkräfte.

Zur Erzeugung einer Linearbewegung mithilfe eines Spindelantriebs gibt es grundsätzlich zwei Möglichkeiten, das Drehmoment des Motors in das Spindelsystem einzuleiten. Im einfachsten Fall wird eine Verbindung zwischen Motorwelle und Spindel in Form einer Kupplung (flexibel oder starr) hergestellt. Die Spindelmutter ist in diesem Fall auf Verdrehung gesichert, sodass sie bei Drehung der Motorwelle und Spindel eine axiale Verschiebung entlang der Längsachse der Spindel erfährt. Die zweite Möglichkeit besteht darin, das Drehmoment des Motors nicht in die Spindel, sondern in die Spindelmutter einzuleiten. Hierbei spricht man auch von einer angetriebenen Mutter. In diesem Fall muss die Spindel mit einer Verdrehsicherung und einer Radiallagerung ausgestattet sein, um eine Axialbewegung der Spindel während der Drehung der Spindelmutter erwirken zu können. In diesem Fall erfährt also die Spindel keine Rotation, sondern führt anstelle der Spindelmutter die axiale Translationsbewegung aus.

Je nach Art des Antriebs und Art der Ausführung können Spindelantriebe also zur Erzeugung sehr hoher Linearkräfte eingesetzt werden. Diesen Vorteil macht man sich in Elektropressen zunutze, bei denen ein Spindelantrieb zum Antreiben des Pressstempels verwendet wird.

In solchen Pressen, aber auch in anderen Maschinen, in denen Spindelantriebe als Teil hochdynamischer Systeme mit Block- bzw. Kollisionsfahrt verwendet werden, treten bedingt durch die Massenträgheitsmomente des Motors und des Spindelsystems extrem hohe Spitzenkräfte auf. Diese bei Block- bzw. Kollisionsfahrt entstehenden Spitzenkräfte können Teile des Antriebsstrangs zerstören. Um solche Spitzenkräfte zu begrenzen, werden häufig Überlastkupplungen, welche oft auch als Sicherheitskupplungen bezeichnet werden, eingesetzt. Hierbei wird grundsätzlich zwischen linearen und rotativen Überlastkupplungen unterschieden.

Lineare Überlastkupplungen werden meist direkt mit dem Spindelsystem verbunden. Die Verbindung von Motorwelle und Spindel kann hierbei starr ausgebildet werden. Eine Linearkupplung weist üblicherweise zwei gegeneinander linear beweglichen Kupplungsteilen auf, welche durch federvorgespannte Druck- oder Rastelemente miteinander kraftschlüssig verbunden sind. Die federvorgespannten Druck- bzw. Rastelemente, welche kugel-, konus-, oder zylinderförmig sind, sind mit einer Kupplungshälfte fest verbunden. Sie drücken auf eine entsprechende Geometrie der zweiten Kupplungshälfte. Wird eine definierte Axialkraft überschritten, werden die gefederten Druck- bzw. Rastelemente aus den Geometrien herausgedrückt, wodurch die Überlastkupplung ausrastet und die Übertragung der Axialkraft unterbrochen wird.

Ein wesentlicher Nachteil linearer Überlastkupplungen sind die extrem großen Baulängen sowie die Tatsache, dass der Ausrasthub begrenzt ist. Problematisch ist zudem eine ausgerastete Linearkupplung wieder in ihren Ausgangszustand zurückzubringen. Aus diesen Gründen sind derartige lineare Überlastkupplungen für den hier vorliegend gewünschten Einsatzzweck in Elektropressen kaum geeignet.

Rotative Überlastkupplungen, welche auch als Drehmomentkupplungen bezeichnet werden, verfügen über zwei Kupplungshälften und werden normalerweise zwischen der Motorwelle und der Spindel des Spindelantriebs montiert. Im Regelfall beinhalten Drehmomentkupplungen zwei Nabenhälften, welche kraftschlüssig miteinander verbunden sind. Federvorgespannte Rastelemente in Form von Kugeln, Koni oder Zylinder übertragen die Kräfte über entsprechend ausgestaltete Formnuten. Wird ein definiertes Drehmoment überschritten, werden die gefederten Rastelemente aus den Formnuten herausgedrückt, wodurch die Drehmomentkupplung ausrastet und die Drehmomentübertragung unterbrochen wird. Das übertragende Drehmoment kann zum einen durch die Federvorspannung als auch durch die Ausgestaltung der Geometrie der Rastelemente und der Formnuten bestimmt werden.

Ein wesentlicher Vorteil von Drehmomentkupplungen besteht darin, dass der Motor beliebig oft nach dem Ausrasten weiterdrehen kann. Hier gibt es keinerlei Einschränkung. Problematisch ist jedoch, dass bei einer ausgerasteten Drehmomentkupplung das Gebersystem des Motors in einer anderen Ausrichtung zum Spindel steht. Hier muss ein zusätzlicher technischer Aufwand betrieben werden, um einen definierten Zustand zwischen Motorgeber und Spindelposition zu erreichen. Dies kann z.B. mittels eines Direktwegmesssystems, welches den Fahrweg der Spindelmutter bzw. der Spindel erfasst, realisiert werden.

Nachteilig an Drehmomentkupplungen ist allerdings die Tatsache, dass mit diesen lediglich Drehmomente, aber keinerlei Axialkräfte übertragen werden können. Bei einem Einsatz solcher Drehmomentkupplungen in Zusammenhang mit Spindelantrieben muss die Spindel zwangsweise mit einem Axiallager ausgestattet sein, um die Ausrastfunktion bei Überschreitung des Drehmoments zu gewährleisten. Solche technischen Lösungen bedingen allerdings einen sehr großen Bauraum.

Es gestaltet sich ohnehin schwierig, derartige rotative Überlastkupplungen mit herkömmlichen Spindelantrieben zu kombinieren, ohne dass dies einen enormen Platzbedarf erfordert. Insbesondere bei Spindelantrieben mit angetriebener Spindelmutter ist es kaum möglich, handelsübliche rotative Überlastkupplungen zwischen Motor und Spindelmutter zu verbauen. In solchen Fällen weist der Motor üblicherweise eine Hohlwelle auf, in welche die Spindelmutter eingeführt ist. Platz für eine Überlastkupplung ist dabei kaum vorhanden.

Die DE 10 2006 036 961 A1 zeigt eine Überlastsicherung für Spindelmuttern, mit einer auf der Kugelgewindespindel angeordneten und mit dieser im Eingriff befindlichen Spindelmutter, die zur Spindelachse drehbar und axial fixiert in einem am Schlitten befestigten Kupplungsgehäuse angeordnet ist und mit zwischen Spindelmutter und Kupplungsgehäuse angeordneten Formkörpern, wobei die drehmomentübertragende Verbindung zwischen Druckflanschausnehmungen und Gehäuseausnehmungen durch die Formkörper spielfrei erfolgt.

Vor diesem Hintergrund ist es eine Aufgabe der vorliegenden Erfindung, eine Presse mit einem Spindelantrieb bereitzustellen, welcher die oben genannten Nachteile überwindet. Hierbei ist es insbesondere eine Aufgabe, die bei der Block- bzw. Kollisionsfahrt auftretenden Spitzenkräfte zu begrenzen, ohne dass dies einen enormen, zusätzlichen Bauraum im Vergleich zu üblichen Spindelantrieben erfordert. Ebenso soll hierdurch die mit dem Spindelantrieb maximal übertragbare Linearkraft nicht oder zumindest nicht wesentlich eingeschränkt werden.

Erfindungsgemäß wird diese Aufgabe ausgehend von der Presse der eingangs genannten Art dadurch gelöst, dass der Motor das Gehäuse rotatorisch antreibt und die Presse eine Überlastkupplung aufweist, welche in dem Gehäuse angeordnet ist. Die Spindelmutter und das Gehäuse sind über die Überlastkupplung miteinander verbunden. Die Überlastkupplung ist dazu eingerichtet, die Spindelmutter bei Überschreiten eines definierten, zwischen Spindelmutter und Gehäuse wirkenden Überlastdrehmoments, von dem Gehäuse drehmomentfrei zu trennen.

Die erfindungsgemäße Presse zeichnet sich insbesondere dadurch aus, dass eine rotative Überlastkupplung (Drehmomentkupplung) unmittelbar in den Spindelantrieb integriert ist. Die Spindelmutter wird als Teil des Kupplungssystems der Überlastkupplung verwendet. Als Gegenstück, das mit der Spindelmutter über die Überlastkupplung verbunden ist, dient ein Gehäuse, welches vorzugsweise sowohl die Spindelmutter als auch die Überlastkupplung umgibt. Spindelmutter und Überlastkupplung sind daher in ein und demselben Gehäuse untergebracht, welches zusammen mit der Spindelmutter und der Überlastkupplung auf der Spindel angeordnet ist. Dies ermöglicht eine extrem kompakte Bauweise.

Im Normalbetrieb, also so lange das definierte Überlast-Drehmoment nicht erreicht ist, rotieren Spindelmutter und Gehäuse, über die Überlastkupplung miteinander verbunden, synchron gegenüber der Spindel. Zwischen Spindelmutter und Gehäuse findet im Normalbetrieb also keine Relativbewegung statt. Solch eine Relativbewegung erfolgt nur bei Erreichen des definierten überlast-Drehmoments, das ein Ausrasten der Überiastkupplung zur Folge hat.

Der Motor (vorzugsweise einen Elektromotor mit Hohlwelle) der Presse treibt das Gehäuse rotatorisch an.

Bei der erfindungsgemäßen Presse wird also die Spindelmutter über das Gehäuse und die Überlastkupplung angetrieben. Ein Vorteil dieser Lösung besteht insbesondere darin, dass die Spindel selbst keine Rotation erfährt. Die Translationsgeschwindigkeit bei einem Spindelantrieb mit angetriebener Mutter wird demnach nicht durch die "kritische Spindeldrehzahl" begrenzt.

Gemäß einer weiteren Ausgestaltung der vorliegenden Erfindung weist der Motor eine rotatorisch angetriebene Hohlwelle auf, in der das Gehäuse angeordnet ist und mit der das Gehäuse drehfest verbunden ist.

Das Gehäuse des Spindelantriebs wird also quasi als Bestandteil des Hohlwellenmotors verwendet. Aufgrund der oben beschriebenen, kompakten Bauweise können daher Gehäuse sowie die darin befindliche Überlastkupplung und Spindelmutter unmittelbar und direkt in die Hohlwelle des Motors aufgenommen werden. Trotz Überlastkupplung bedarf es kaum mehr Platzbedarf als bei handelsüblichen Spindelantrieben mit angetriebener Spindelmutter, bei denen die Spindelmutter direkt mit der Antriebswelle des Motors verbunden ist und keine Überlastkupplung vorhanden ist.

Gemäß einer weiteren Ausgestaltung weist der Spindelantrieb ferner ein Radiallager zur radialen Lagerung der Spindelmutter im Gehäuse sowie ein Axiallager zur axialen Lagerung der Spindelmutter im Gehäuse auf. Radial- und Axiallager können auch in einem Lager zusammengefasst sein, welches die Spindelmutter sowohl in axialer Richtung, also parallel zur Längsachse der Spindel, als auch in radialer Richtung im Gehäuse lagert. Bei Verwendung solcher kombinierter Axial-/ Radiallager sind vorzugsweise zumindest zwei dieser kombinierten Axial-/Radiallager vorgesehen. Auch dieser Fall soll im vorliegenden Sinne als Ausgestaltung mit einem Radiallager und einem Axiallager angesehen werden.

Das Radiallager ermöglicht die Relativbewegung zwischen Gehäuse und Spindelmutter, wenn die Überlastkupplung bei Erreichen des Überlast-Drehmoments ausrastet. Das Radiallager kann beispielsweise ein oder mehrere Gleitlager aufweisen. Alternativ dazu kann das Radiallager auch ein oder mehrere Kugel- oder Wälzlager aufweisen.

Das Axiallager hat die Aufgabe, die Axialkräfte zwischen Spindelmutter und Gehäuse zu übertragen. Ohne ein solches Axiallager wäre die Übertragung großer Axialkräfte mithilfe des erfindungsgemäßen Spindelantriebs kaum möglich, da rotative Überlastkupplungen, wie eingangs bereits erwähnt, sich kaum zur Übertragung großer Axialkräfte eignen, da diese üblicherweise lediglich zur Übertragung von Kräften in Umfangsrichtung (Azimutalrichtung) geeignet sind.

Gemäß einer weiteren Ausgestaltung der vorliegenden Erfindung weist die Überlastkupplung ein erstes Kupplungsbauteil, welches drehfest mit der Spindelmutter verbunden ist, ein zweites Kupplungsbauteil, welches drehfest mit dem Gehäuse verbunden ist, sowie mehrere zwischen dem ersten und dem zweiten Kupplungsbauteil angeordnete Rastelemente auf, die bei Erreichen des Überlast-Drehmoments aus einer Rastposition durch eine Relativbewegung zu dem ersten und/oder zweiten Kupplungsbauteil ausrasten.

Unter einer drehfesten Verbindung wird vorliegend eine Verbindung zwischen zwei Bauteilen verstanden, die eine Relativbewegung der beiden Bauteile zumindest in Umfangsrichtung nicht erlaubt. Dies kann durch eine kraft-, form- oder stoffschlüssige Verbindung realisiert sein. Je nach Art der Verbindung beider Bauteile kann unter Umständen eine Relativbewegung in Längs- und/oder Radialrichtung möglich sein. Eine fixe Verbindung beider Bauteile, welche keinerlei Relativbewegung ermöglicht (also auch nicht in Längs- oder Radialrichtung), wird ebenfalls als drehfeste Verbindung im vorliegenden Sinne angesehen.

In einer weiteren Ausgestaltung weist das erste Kupplungsbauteil, welches drehfest mit der Spindelmutter verbunden ist, eine erste Rastscheibe mit mehreren ersten Nuten auf. Ebenso weist das zweite Kupplungsbauteil, welches drehfest mit dem Gehäuse verbunden ist, eine zweite Rastscheibe mit mehreren zweiten Nuten auf. Die Rastelemente sind gemäß dieser Ausgestaltung in der Rastposition jeweils in einer der ersten Nuten oder in einer der zweiten Nuten angeordnet.

Die Rastelemente können beispielsweise als zylindrische oder konische Wälzkörper ausgestaltet sein. Bevorzugt sind die Rastelemente jedoch kugelförmig ausgestaltet, beispielsweise in Form von Stahlkugeln. Die Form der in den beiden Rastscheiben vorgesehenen Nuten ist an die Form der Rastelemente angepasst. Eine Möglichkeit der Steuerung bzw. Einstellung des Überlast-Drehmoments, bei dem die Überlastkupplung ausrastet, ist eine entsprechende Anpassung der Form und Größe der in den beiden Rastscheiben vorgesehenen Nuten.

In einer bevorzugten Ausgestaltung sind gleich viele zweite Nuten wie erste Nuten, aber doppelt so viele Rastelemente wie erste Nuten vorgesehen.

Mit anderen Worten ist jedes Rastelement in der Rastposition der Überlastkupplung entweder in einer der ersten Nuten, welche in der ersten Rastscheibe vorgesehen sind, oder in einer der zweiten Nuten, welche in der zweiten Rastscheibe vorgesehen sind, angeordnet. Die Rastelemente sind also nicht gleichzeitig in einer ersten und einer zweiten Nut angeordnet, sondern nur in einer Nut einer Rastscheibe, sodass sie mit ihrer jeweils gegenüberliegenden Seite auf die glatte Oberfläche der jeweils anderen Rastscheibe gedrückt werden.

Die Tatsache, dass jedes Rastelement in nur einer Nut angeordnet ist, hat folgende Vorteile: zum einen ermöglicht dies eine mechanisch einfache Art der Ausgestaltung der Überlastkupplung. Zum anderen wird hierdurch der Ausrasthub verringert. Unter dem Ausrasthub wird vorliegend die Distanz verstanden, um die sich die beiden Rastscheiben voneinander weg bewegen müssen, um ein Ausrasten der Rastelemente aus den Nuten und damit ein Ausrasten der Überlastkupplung zu ermöglichen. Diese Reduzierung des Ausrasthubs ermöglicht eine Minderung des zwischen Rastelementen und den beiden Rastscheiben auftretenden Verschleißes. Des Weiteren kann dadurch die Ausrastkraft mit geringen Toleranzen bemessen werden.

Gemäß einer weiteren Ausgestaltung sind die ersten Nuten und die zweiten Nuten jeweils asymmetrisch ausgestaltet und weisen jeweils einander gegenüberliegende Nutflanken unterschiedlicher Neigung auf.

Dies hat insbesondere den Vorteil, dass unterschiedliche Ausrastkräfte, also unterschiedliche Überlast-Drehmomente für die zwei entgegengesetzten Drehrichtungen definiert werden können. So kann beispielsweise über eine steilere Nutflanke, also eine größere Neigung der Nutflanke relativ zur Stirnfläche der jeweiligen Rastscheibe, eine relativ große Ausrastkraft und damit ein großes Überlast-Drehmoment definiert werden. Umgekehrt kann durch eine flachere Nutflanke, also eine vergleichsweise geringere Neigung der Nutflanke relativ zur Stirnfläche der jeweiligen Rastscheibe, eine geringere Ausrastkraft und damit ein geringeres Überlast-Drehmoment definiert werden. Asymmetrisch geformte Nuten mit unterschiedlich geneigten Nutflanken ermöglichen es also, in einer Drehrichtung des Spindelantriebs ein größeres Überlast-Drehmoment vorzusehen als in der entgegengesetzten Drehrichtung. Bei Einsatz in einer Presse kann die in Presskraft-Richtung wirkende Nutflanke steiler geneigt sein als die in Richtung des Rückhubes wirkende Nutflanke.

Die zweite Rastscheibe ist in den zuvor genannten Ausgestaltungen vorzugsweise in Axialrichtung, also parallel zur Längsachse der Spindel, federnd im Gehäuse gelagert. Diese Federung drückt die zweite Rastscheibe gegen die Rastelemente und diese wiederum gegen die erste Rastscheibe. Die erste Rastscheibe ist in Längsrichtung vorzugsweise fixiert.

Diese Federung wirkt also einem Ausrasten der Überlastkupplung entgegen. Die Federkraft dieser Federung ist eine weitere Möglichkeit, anhand derer das Überlast-Drehmoment definiert werden kann.

Vorzugsweise wird nicht nur ein Federelement, sondern eine Vielzahl von Federelementen zur federnden Lagerung der zweiten Rastscheibe im Gehäuse eingesetzt. Durch den Einsatz mehrerer Federelemente wird gewährleistet, dass die Vorspannkraft, welche auf die Rastelemente ausgeübt wird, homogen eingeleitet wird. Toleranzen einzelner Federelemente können somit weitestgehend eliminiert werden.

Gemäß einer weiteren Ausgestaltung weist das Gehäuse mehrere Führungsnuten auf, in die jeweils ein Steg eingreift, der mit der zweiten Rastscheibe verbunden ist und radial von der zweiten Rastscheibe auskragt, wobei die Stege in den Führungsnuten jeweils in Axialrichtung beweglich, jedoch in Umfangsrichtung fixiert sind.

Diese im Gehäuse vorgesehenen Führungsnuten fungieren also als Lagerung der zweiten Rastscheibe in Umfangsrichtung, wodurch die drehfeste Verbindung zwischen Gehäuse und zweiter Rastscheibe realisiert wird. Die Beweglichkeit der zweiten Rastscheibe gegenüber dem Gehäuse in Axialrichtung wird dazu benötigt, ein Ausrasten der Überlastkupplung entgegen der erwähnten Feder-Vorspannkraft bei Erreichen des Überlast-Drehmoments zu gewährleisten.

Anstelle einer Ausgestaltung der Überlastkupplung mit zwei Rastscheiben und dazwischen angeordneten Rastelementen kann die Überlastkupplung alternativ dazu auch derart ausgestaltet sein, dass das zweite Kupplungsbauteil mehrere Halterungen aufweist, in denen jeweils eines der Rastelemente federnd gelagert ist, und wobei das erste Kupplungsbauteil mehrere Nuten aufweist, in die die Rastelemente in der Rastposition eingreifen.

In dieser alternativen Art der Ausgestaltung der Überlastkupplung sind bevorzugt stabförmige Rastelemente vorgesehen, welche gegenüber der genannten Halterung in Radialrichtung, also senkrecht zur Längsachse der Spindel, federbeweglich gelagert sind. Der Ausrasthub erfolgt im Gegensatz zu der oben erwähnten Ausgestaltung somit also nicht parallel zur Längsachse der Spindel, sondern senkrecht zu dieser.

Auch bei dieser Ausgestaltung können die Nuten, welche in dem ersten Kupplungsbauteil vorgesehen sind, je nach gewünschter Ausrastkraft bzw. gewünschten Überlast-Drehmoment in ihrer Form, Größe und Lage angepasst werden.

In dieser Ausgestaltung kann es weiterhin vorgesehen sein, dass das erste Kupplungsbauteil als Hülse ausgestaltet ist, welche die Spindelmutter zumindest teilweise umgibt und mit dieser drehfest verbunden ist. Die radial verschieblichen Rastelemente greifen dann also nicht direkt an der Spindelmutter an, sondern an einer Hülse, welche auf die Spindelmutter aufgesteckt ist. Die Hülse kann beispielsweise über eines oder mehrere Befestigungselemente mit der Spindelmutter verbunden sein. Ebenso denkbar sind auch andere Arten einer kraft-, form- oder stoffschlüssigen Verbindung zwischen Hülse und Spindelmutter.

Des Weiteren versteht es sich, dass die vorstehend genannten und die nachstehend zu erläuternden Merkmale nicht nur in der jeweils angegebenen Kombination, sondern auch in anderen Kombinationen verwendbar sind, ohne den Rahmen der vorstehenden Erfindung, wie sie in den angehängten Ansprüchen definiert ist, zu verlassen.

Ausführungsbeispiele der Erfindung sind in den Zeichnungen dargestellt und werden in der nachfolgenden Beschreibung näher erläutert. Es zeigen:
- Fig. 1: eine schematische Darstellung einer Elektropresse, die als erfindungsgemäße Presse ausgestaltet sein kann;
- Fig. 2: eine perspektivische Darstellung eines ersten Ausführungsbeispiels eines in der erfindungsgemäße Presse zum Einsatz kommenden Spindelantriebs;
- Fig. 3: eine Schnittansicht des in Fig. 2 gezeigten ersten Ausführungsbeispiels des Spindelantriebs;
- Fig. 4: eine Halbschnittansicht des in Fig. 2 gezeigten ersten Ausführungsbeispiels des Spindelantriebs;
- Fig. 5: eine perspektivische Darstellung einer Überlastkupplung, welche in dem Spindelantrieb gemäß des ersten Ausführungsbeispiels zum Einsatz kommt, wobei die Überlastkupplung in einer Rastposition gezeigt ist;
- Fig. 6: eine Detailansicht aus Fig. 5;
- Fig. 7: eine perspektivische Darstellung der Überlastkupplung aus Fig. 5, wobei die Überlastkupplung in einer Ausrastposition gezeigt ist;
- Fig. 8: eine Längsschnittansicht eines zweiten Ausführungsbeispiels eines in der erfindungsgemäße Presse zum Einsatz kommenden Spindelantriebs;
- Fig. 9: eine Querschnittsansicht des zweiten Ausführungsbeispiels des Spindelantriebs, wobei die Überlastkupplung in der Rastposition gezeigt ist;
- Fig. 10: eine Querschnittsansicht des zweiten Ausführungsbeispiels des Spindelantriebs, wobei die Überlastkupplung in einer Ausrastposition gezeigt ist;
- Fig. 11: eine Detailansicht aus Fig. 9, welche die Rastposition der Rastelemente zeigt; und
- Fig. 12: eine Detailansicht wie in Fig. 9, wo bei die Rastelemente in ihrer Ausrastposition gezeigt sind.

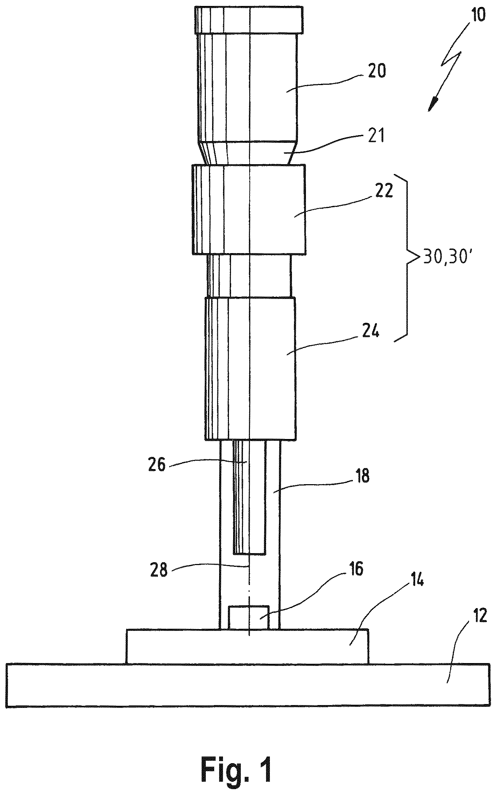

In Fig. 1 ist eine schematische Darstellung einer Elektropresse, die als erfindungsgemäße Presse ausgestaltet sein kann. Die Elektropresse ist darin gesamthaft mit der Bezugsziffer 10 bezeichnet.

Die Elektropresse 10 besitzt eine Grundplatte 12, auf der sich ein Werkstückhalter 14 mit einem zu bearbeitenden Werkstück 16 befindet. Von der Grundplatte 12 ragt eine Säule 18 nach oben. Am oberen Ende der Säule 18 befindet sich ein elektrischer Antriebsmotor 20 mit einer Hohlwelle 21, darunter ein Gehäuse 22, in dem ein Teil des erfindungsgemäßen Spindelantriebs untergebracht sein kann, und darunter eine Spindel 24 des erfindungsgemäßen Spindelantriebs. Der Spindelantrieb ist in Fig. 1 schematisch mit der Bezugsziffer 30 bezeichnet. Der Spindelantrieb 30 wandelt die rotatorische Bewegung des Antriebsmotors 20 in eine translatorische Bewegung der Spindel 24. An der Spindel 24 ist ein Pressenstößel 26 angebracht, der nach unten hin hinausragt. Dieser Pressenstößel 26 wird letztendlich mithilfe des Antriebsmotors 20 und dem Spindelantrieb 30 entlang einer vertikalen Achse 28 translatorisch auf das Werkstück 16 zu und wieder von diesem weg bewegt, um das Werkstück 16 zu bearbeiten. Eine mögliche Form der Bearbeitung, die für Elektropressen, welche als Fügepressen eingesetzt werden, typisch ist, ist das Fügen des Werkstücks mit weiteren Bauteilen.

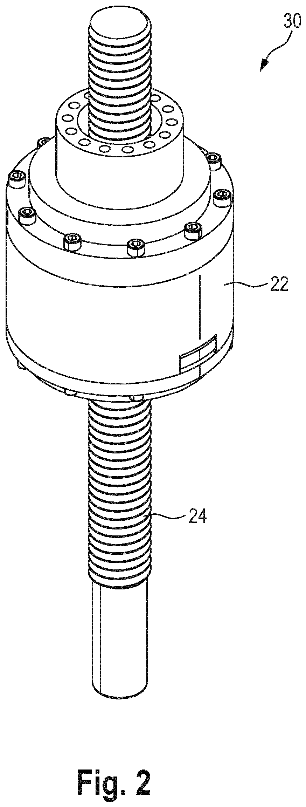

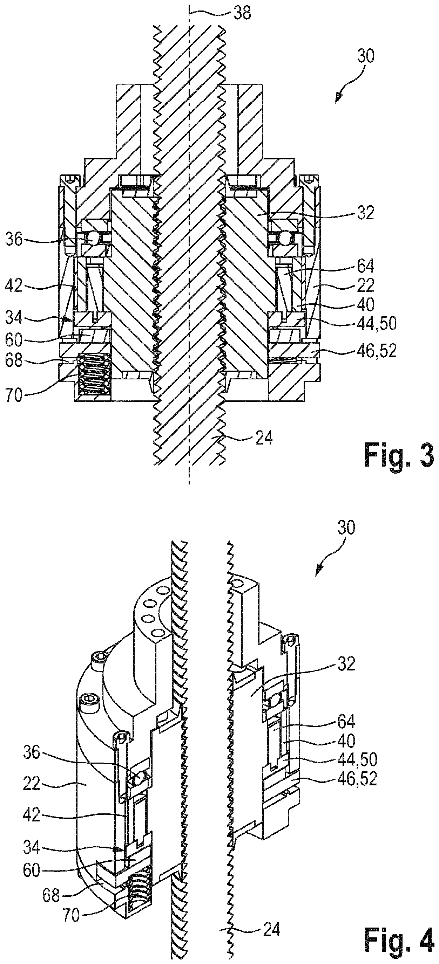

Fig. 2 zeigt ein erstes Ausführungsbeispiel eines in der erfindungsgemäße Presse zum Einsatz kommenden Spindelantriebs 30 in einer perspektivischen Ansicht. Weitere Schnitt- bzw. Halbschnittansichten sind in Fig. 3 und 4 gezeigt.

Neben Gehäuse 22 und Spindel 24 weist der Spindelantrieb ferner eine auf der Spindel 24 montierte Spindelmutter 32 auf. In dem vorliegenden Ausführungsbeispiel des Spindelantriebs 30 handelt es sich um einen Spindelantrieb mit angetriebener Spindelmutter 32. Demzufolge wird die Spindelmutter 32 rotatorisch angetrieben, wodurch eine rein translatorische Bewegung der Spindel 24 (ohne Rotation) bewirkt wird. Um dies gewährleisten zu können, ist die Spindel 24 mit einer Verdrehsicherung (nicht gezeigt) versehen. Das Antreiben der Spindelmutter 32 erfolgt indirekt, indem das Gehäuse 22 von dem Antriebsmotor 20 angetrieben wird. Das Gehäuse 22 ist daher fix mit der Antriebswelle des Antriebsmotors 20 verbunden. Vorzugsweise ist der Antriebsmotor 20 als Hohlwellenmotor ausgestaltet, sodass das Gehäuse 22 teilweise oder gesamthaft in die Hohlwelle 21 des Antriebsmotors 20 eingeführt und mit dieser drehfest (kraft-, form- oder stoffschlüssig) verbunden ist.

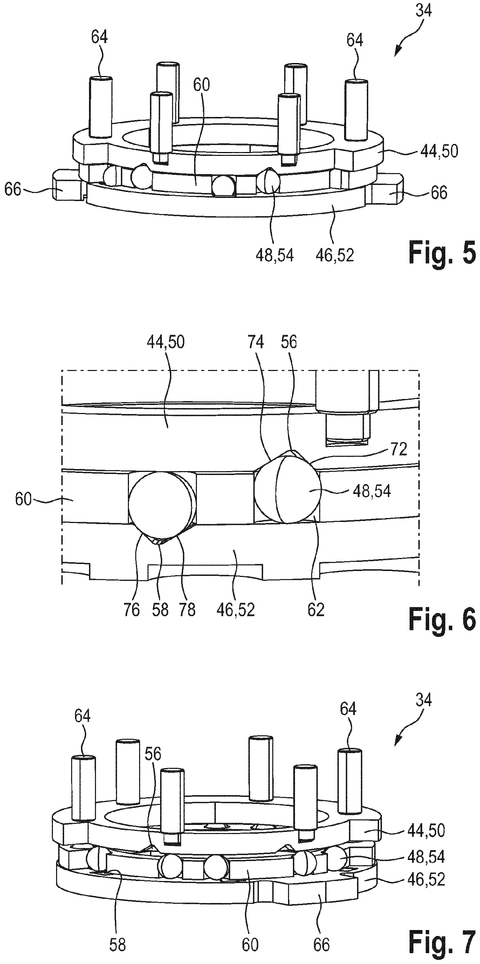

Das Gehäuse 22 ist mit der Spindelmutter 32 über eine Überlastkupplung 34 verbunden. Teile dieser Überlastkupplung 34 sind in den Fig. 5-7 im Detail gezeigt. Die Überlastkupplung 34 ist dazu eingerichtet, die Spindelmutter 32 bei Überschreiten eines definierten, zwischen Spindelmutter 32 und Gehäuse 22 wirkenden Überlast-Drehmoments von dem Gehäuse 22 drehmomentfrei zu trennen. Bei Erreichen eines Überlast-Drehmoments, welches bei der in Fig. 1 gezeigten Presse 10 beispielsweise bei Überschreiten einer maximal auf das Werkstück 16 ausgeübten Presskraft auftreten kann, rastet die Überlastkupplung 34 also aus. Hierdurch können Beschädigungen am Spindelantrieb 30 sowie am Antriebsmotor 20 verhindert werden. Darüber hinaus lässt sich die maximal gewünschte Presskraft nicht nur anhand des Motordrehmoments, sondern auch anhand der entsprechenden Auslegung der Überlastkupplung 34 definieren.

Ein charakteristisches Merkmal des erfindungsgemäßen Spindelantriebs 30 ist die Integration der Überlastkupplung 34 in das Gehäuse 22 des Spindelantriebs 30. Das Gehäuse 22 umgibt nicht nur die Spindelmutter 32, sondern auch die Überlastkupplung 34. Umgekehrt fungiert die Spindelmutter 32 auch als Teil der Überlastkupplung 34. Hierdurch lässt sich eine sehr kompakte Bauform des Spindelantriebs 30 samt Überlastkupplung 34 realisieren.

Der Spindelantrieb 30 weist ferner ein Axiallager 36 auf. Dieses Axiallager 36 dient der axialen Lagerung der Spindelmutter 32 im Gehäuse 22. Unter "axial" wird vorliegend die Richtung parallel zur Längsachse 38 der Spindel 24 verstanden. Das Axiallager 36 ist zwischen einer senkrecht zur Längsachse 38 der Spindel 24 verlaufenden Stirnfläche des Gehäuses 22 und einer ebenfalls senkrecht zur Längsachse 38 der Spindel 24 verlaufenden Stirnseite der Spindelmutter 32 angeordnet. Die genannte Stirnfläche der Spindelmutter 32 befindet sich an einem Flansch 40, welcher radial von der Spindelmutter 32 absteht. Im vorliegenden Ausführungsbeispiel ist das Axiallager 36 als Rillenkugellager ausgeführt. Es versteht sich jedoch, dass auch andere Lagerarten hierfür in Betracht kommen.

Das Axiallager hat die Aufgabe, die Axialkräfte von der Spindelmutter 32 an das Gehäuse 22 zu übertragen. Im Normalfall wird dieses Axiallager 36 nur statisch belastet, da im Normalbetrieb keine Relativbewegung zwischen Spindelmutter 32 und Gehäuse 22 stattfindet.

Lediglich bei Ausrasten der Überlastkupplung 34, also bei Überschreiten des Überlast-Drehmoments, findet eine Relativbewegung (Rotation) zwischen Gehäuse 22 und Spindelmutter 32 statt. Um dies zu gewährleisten ist das Axiallager 36 dazu ausgelegt, eine derartige Bewegung des Gehäuses 22 um die Längsachse 38 relativ zu der Spindelmutter 32 zu ermöglichen. Zudem weist der Spindelantrieb 30 ein Radiallager 42 zur radialen Lagerung der Spindelmutter 32 im Gehäuse 22 auf. Dieses Radiallager 42 ist zwischen einer Außenseite des Flansches 40 der Spindelmutter 32 und einer Innenseite des Gehäuses 22 angeordnet. Im vorliegenden Ausführungsbeispiel ist das Radiallager 42 als Gleitlager ausgebildet. Auch hier kommen jedoch auch andere Lagerarten in Betracht. Ähnlich wie bei dem Axiallager 36 findet im Normalbetrieb des Spindelantriebs 30 keine Bewegung zwischen dem Gleitlager 42 und der Spindelmutter 32 statt. Eine derartige Bewegung erfolgt, wie auch beim Axiallager 36, lediglich im Falle des Ausrastens der Überlastkupplung 34.

Die Überlastkupplung 34 weist ein erstes Kupplungsbauteil 44 auf, welches drehfest mit der Spindelmutter 32 verbunden ist. Des Weiteren weist die Überlastkupplung 34 ein zweites Kupplungsbauteil 46 auf, welches drehfest mit dem Gehäuse 22 verbunden ist. Zwischen dem ersten Kupplungsbauteil 44 und dem zweiten Kupplungsbauteil 46 sind mehrere Rastelemente 48 angeordnet, welche bei einem Ausrasten der Überlastkupplung 34 eine Relativbewegung zwischen den beiden Kupplungsbauteilen 44, 46 ermöglichen. Die Rastelemente 48 rasten bei Erreichen des Überlast-Drehmoments auf einer Rastposition aus und bewegen sich relativ zu dem ersten Kupplungsbauteil 44 und/oder dem zweiten Kupplungsbauteil 46.

In dem in Fig. 2-7 gezeigten ersten Ausführungsbeispiel sind die beiden Kupplungsbauteile 44, 46 als Rastscheiben 50, 52 ausgebildet. Sie werden vorliegend als erste Rastscheibe 50 und zweite Rastscheibe 52 bezeichnet. Die Rastelemente 48 sind in diesem Ausführungsbeispiel als Rastkugeln 54 ausgestaltet, welche entweder in erste Nuten 56, die in die erste Rastscheibe 50 eingebracht sind, oder in zweite Nuten 58, welche in die zweite Rastscheibe 52 eingebracht sind, angeordnet sind. In Radialrichtung sowie in Umfangsrichtung werden die Rastkugeln 54 durch einen massiven Käfig 60 gehalten, welcher mehrere Aufnahmen 62 zur Aufnahme jeweils einer Rastkugel 54 aufweist. Dieser Käfig 60 ist dementsprechend ebenfalls zwischen der ersten Rastscheibe 50 und der zweiten Rastscheibe 52 angeordnet.

Die Rastelemente 48 bzw. Rastkugeln 54 fungieren beim Ausrasten der Überlastkupplung 34 als Wälzkörper. Anstelle von Rastkugeln 54 ließen sich grundsätzlich auch zylindrische oder konische Wälzkörper verwenden. Werden wie vorliegend Rastkugeln 54 zur Kraftübertragung verwendet, so wird die Kraft bzw. das Drehmoment punktförmig übertragen. Bei zylindrischen oder konischen Rastelementen 48 würde die Kraft bzw. das Drehmoment dagegen linienförmig übertragen werden.

Die Nuten 56, 58 sind konkav ausgestaltet. Sie können sowohl als lineare, also geradlinige Nuten, oder im einfachsten Fall als Bohrungen ausgeführt sein. Die Nuten 56, 58 übernehmen die Führung der Rastkugeln 54 in Umfangsrichtung. Die Drehmomentübertragung zwischen Gehäuse 22 und Spindelmutter 32 erfolgt somit über die mittels der Überlastkupplung 34 übertragenen und in Umfangsrichtung wirkenden Kräfte. Der Kraftfluss ist dabei wie folgt: Die von dem Motor 20 ausgeübte Antriebskraft wird in das Gehäuse 22 eingeleitet. Von dort aus wird die Kraft über die zweite Rastscheibe 52, über die zweiten Nuten 58 auf die in den zweiten Nuten 58 angeordneten Rastkugeln 54 übertragen. Die in den zweiten Nuten 58 angeordneten Rastkugeln 58 übertragen die Kraft über den Käfig 60 auf die Rastkugeln 54, welche in den ersten Nuten 56 der ersten Rastscheibe 50 angeordnet sind. Von dort aus wird die Kraft über die ersten Nuten 56 in die erste Rastscheibe 50 eingeleitet, sodass die Kraft über die erste Rastscheibe 50 schlussendlich auf die Spindelmutter 32 übertragen wird.

Bei dem in Fig. 2-7 gezeigten Ausführungsbeispiel ist die erste Rastscheibe 50 über mehrere Mitnehmerstifte 64 mit der Spindelmutter 32 verbunden. Die Mitnehmerstifte 64 ragen jeweils in eine Befestigungsbohrung hinein, welche in dem Flansch 40 der Spindelmutter 32 vorgesehen ist. Da die Form und Lagetoleranzen der in dem Flansch 40 vorgesehenen Befestigungsbohrungen für eine exakte und spielfreie Aufnahme der Mitnehmerstifte 64 nicht geeignet sind, werden die Mitnehmerstifte 64 bewusst kleiner ausgebildet, sodass diese kraftfrei in die Befestigungsbohrungen des Flansches 40 der Spindelmutter 32 eindringen können. Um einen soliden Kraftschluss zu realisieren, werden die Befestigungsbohrungen anschließend mit einer Vergussmasse ausgegossen. Somit wird eine hohe Drehmomentübertragung von der ersten Rastscheibe 50 auf die Spindelmutter 32 gewährleistet. Es versteht sich jedoch, dass dies nur ein Beispiel der Verbindung zwischen erster Rastscheibe 50 und Spindelmutter 32 ist. Grundsätzlich kommen auch andere Arten von kraft-, form- oder stoffschlüssigen Verbindungen zwischen diesen beiden Bauteilen in Betracht.

Die zweite Rastscheibe 52 ist drehfest mit dem Gehäuse 22 verbunden. Stege 66, welche von der zweiten Rastscheibe 52 radial auskragen (siehe Fig. 5 und 7), sind in Führungsnuten 68 angeordnet, welche in das Gehäuse 22 eingebracht sind. Durch das Eingreifen der Stege 66 in die Führungsnuten 68 entsteht eine Verdrehsicherung zwischen zweiter Rastscheibe 52 und Gehäuse 22. Die Führungsnuten 68 sind in Axialrichtung, also parallel zu Längsachse 38, der Spindel 24, größer ausgestaltet als die Stege 66. Die Stege 66 und damit auch die zweite Rastscheibe 52 sind somit in Axialrichtung relativ zu dem Gehäuse 22 beweglich, jedoch in Umfangsrichtung fixiert.

Die Möglichkeit der Relativbewegung der zweiten Rastscheibe 52 in Axialrichtung ist insbesondere für das Ausrücken bzw. Ausrasten der Rastelemente 48 aus den jeweiligen Nuten 56, 58, was bei Erreichen des Überlast-Drehmoments geschieht, erforderlich. Die zweite Rastscheibe 52 wird daher anhand einer oder mehrerer Federelemente 70 gegenüber dem Gehäuse 22 abgestützt. Vorzugsweise wird eine Vielzahl von Federelementen 70 vorgesehen, welche die Kraftkugeln 54 in die ersten bzw. zweiten Nuten 56, 58 drücken. Die Federkraft der Federelemente 70 definiert somit nicht nur die Vorspannkraft, mit der die Rastkugeln 54 in die Nuten 56, 58 gedrückt werden, sondern damit auch das Überlast-Drehmoment, ab dem die Überlastkupplung 34 ausrastet. Durch den Einsatz mehrerer Federelemente 70 wird gewährleistet, dass die Vorspannkraft, welche auf die Rastkugeln 54 ausgeübt wird, möglichst homogen verteilt ist. Toleranzen einzelner Federelemente 70 können somit weitestgehend eliminiert werden.

In Fig. 5-7 sind die einzelnen Komponenten der Überlastkupplung 34 im Detail ersichtlich. Teile der ersten Rastscheibe 50 und des Käfigs 60 sind in Fig. 5-7 geschnitten dargestellt, um die Rastkugeln 54 sichtbar zu machen. Fig. 5 zeigt die Rastposition der Überlastkupplung 34, also den Normalfall, während dem die Rastkugeln 54 in den ersten und zweiten Nuten 56, 58 angeordnet sind und ein Drehmoment von der zweiten Rastscheibe 52 auf die erste Rastscheibe 50 übertragen werden kann. Fig. 6 zeigt ein Detail aus Fig. 5. Fig. 7 zeigt dagegen den ausgerasteten Zustand der Überlastkupplung 34, bei dem die Rastkugeln 54 aus den ersten und zweiten Nuten 56, 58 ausgerückt sind und somit kein Drehmoment mehr zwischen der zweiten Rastscheibe 52 und der ersten Rastscheibe 50 übertragen wird. In diesem Zustand ist das Drehmoment des Antriebsmotors 20 bis auf die Reibung, welche sich innerhalb der Lager 36, 42 einstellt, von der Spindelmutter 32 entkoppelt. Die Rastkugeln 54 befinden sich außerhalb der Nuten 56, 58 und rollen auf den glatten Laufflächen der beiden Rastscheiben 50, 52 ab. Das Rollen der Rastkugeln 54 wird durch das Axiallager 36 und das Radiallager 42 ermöglicht. Bedingt durch den Wirkungsgrad des Spindelantriebs 30 wird die Rollreibung der Rastkugeln 54 überwunden.

Die Rastkugeln 54 laufen im ausgerasteten Zustand der Überlastkupplung 34 so lange auf den planen Laufflächen der beiden Rastscheiben 50, 52, bis diese wieder in die Nuten 56, 58 einfallen. Für den Fall, dass der Antriebsmotor 20 noch nicht zum Stillstand gekommen ist und das Antriebsmoment nach wie vor das Überlast-Drehmoment überschreitet, rastet die Überlastkupplung 34 erneut aus. Befindet sich der Antriebsmotor 20 im Stillstand kann eine Rückwärtsbewegung eingeleitet werden. Hierbei rasten die Rastkugeln 54 in entsprechende erste Nuten 56 der ersten Rastscheibe 50 sowie die zweiten Nuten 58 der zweiten Rastscheibe 52 ein. Die Spindel 24 kann nun von der Blockstellung freigefahren werden.

Bei einem Einsatz des Spindelantriebs 30 in einer erfindungsgemäße Presse 10, wie sie in Fig. 1 gezeigt ist, ist im Regelfall in einer Bewegungsrichtung der Spindel 24 (auf das Werkstück 16 zu) eine hohe Presskraft gefordert. Diese Presskraft kann durch die Überlastkupplung 34 definiert begrenzt werden. Beim Rückhub ist allerdings meist erwünscht, dass ein Ausrasten der Überlastkupplung 34 bei einer wesentlich geringeren Kraft stattfindet.

Die unterschiedlichen Ausrastkräfte können sehr einfach durch die Gestaltung der Nutflanken 72, 74 bzw. 76, 78 der ersten und zweiten Nuten 56 bzw. 58 realisiert werden. Durch eine flachere Nutflanke kann die Ausrastkraft reduziert werden. Eine steilere Nutflanke erhöht dagegen die Ausrastkraft. Die Nutflanken 72 der ersten Nuten 56 sind beispielsweise stärker geneigt als die gegenüberliegenden Nutflanken 74. Genauso sind die Nutflanken 76 der zweiten Nuten 58 stärker geneigt als die gegenüberliegenden Nutflanken 78 der zweiten Nuten 58 (siehe Fig. 6).

Aus Fig. 5-7 ist weiterhin ersichtlich, dass in diesem Ausführungsbeispiel doppelt so viele Rastkugeln 54 verwendet werden wie erste Nuten 56 bzw. zweite Nuten 58. Jede Rastkugel 54 ist also entweder in einer der in der ersten Rastscheibe 50 vorgesehenen ersten Nuten 56 oder in einer der in der zweiten Rastscheibe 52 vorgesehenen zweiten Nuten 58 angeordnet. Dies verringert den notwendigen Federweg der Federelemente 70 beim Ausrasten der Überlastkupplung 34. Die Ausrastkraft kann daher mit geringeren Toleranzen bemessen werden. Im Übrigen ist diese Lösung verschleißärmer als bei Überlastkupplungen, bei denen die Rastkugeln jeweils nicht nur in einer, sondern jeweils in zwei Nuten (sowohl in der ersten Rastscheibe als auch in der zweiten Rastscheibe) angeordnet sind.

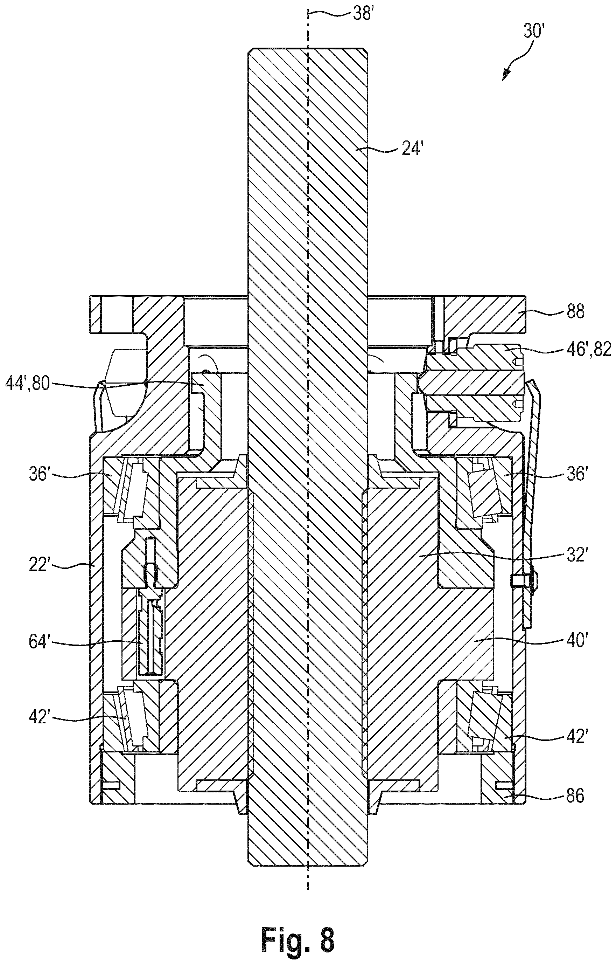

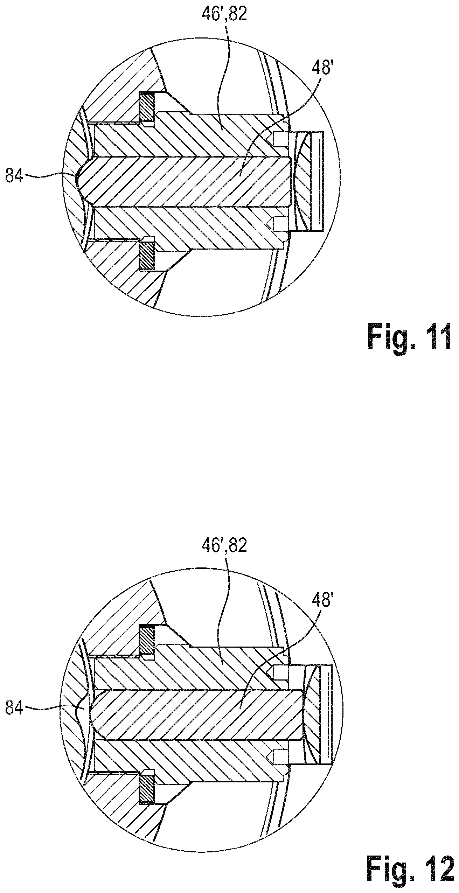

Fig. 8-12 zeigen ein zweites Ausführungsbeispiel eines in der erfindungsgemäße Presse zum Einsatz kommenden Spindelantriebs, welcher in seiner Gesamtheit mit der Bezugsziffer 30' bezeichnet ist. Der Einfachheit halber werden nachfolgend lediglich die wesentlichen Unterschiede zu dem ersten Ausführungsbeispiel erläutert. Das Grundprinzip der Presse mit Spindelantrieb mit integrierter Überlastkupplung bleibt das gleiche, sodass hierauf nachfolgend nicht erneut eingegangen wird. Gleiche oder entsprechende Bauteile sind in Fig. 8-12 mit den gleichen Bezugsziffern wie in Fig. 2-7 gekennzeichnet, allerdings mit einem Hochstrich versehen.

Ein wesentlicher Unterschied des zweiten Ausführungsbeispiels besteht in der Art der Ausführung der Überlastkupplung 34'. Das zweite Kupplungsbauteil 46' ist hier nicht als Rastscheibe ausgestaltet, sondern weist mehrere Halterungen 82 auf, in denen jeweils ein Rastelement 48' federnd gelagert ist. Die Rastelemente 48' sind im Wesentlichen stabförmig ausgestaltet. Die Halterungen 82 sind derart im Gehäuse 22' angeordnet, dass die Rastelemente 48' in Radialrichtung, also senkrecht zur Längsachse 38' der Spindel 24', beweglich sind.

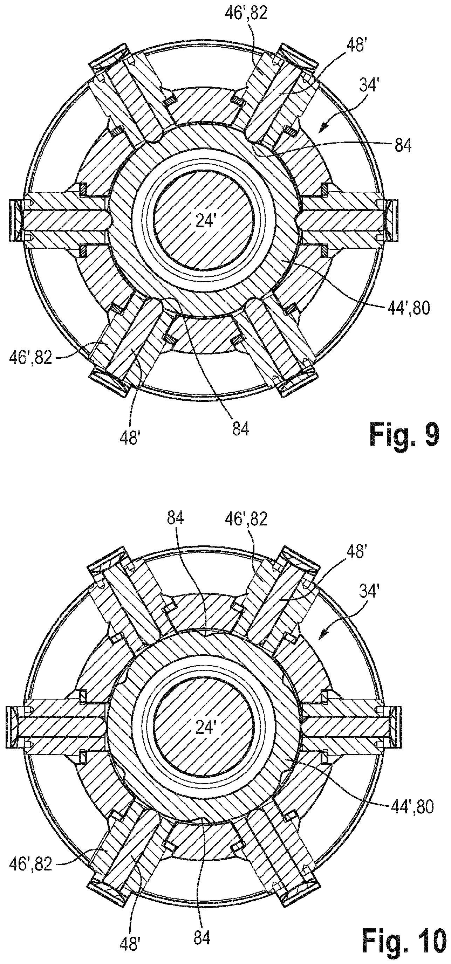

Das erste Kupplungsbauteil 44' ist in dem zweiten Ausführungsbeispiel als Hülse 80 ausgestaltet, welche die Spindelmutter 32' umgibt bzw. auf diese aufgesteckt ist. Die Hülse 80 weist mehrere Nuten 84 auf, in die die stabförmigen Rastelemente 48' in der Rastposition eingreifen (siehe Fig. 9).

Ähnlich bzw. gleich wie in dem ersten Ausführungsbeispiel ist die Hülse 80, welche das erste Kupplungsbauteil 44' bildet, drehfest mit der Spindelmutter 32' verbunden. Die Halterungen 82, welche das zweite Kupplungsbauteil 46' bilden, sind drehfest mit dem Gehäuse 22' verbunden. So lange die Rastelemente 48' in der Rastposition in den Nuten 84 angeordnet sind, erfolgt keine Relativbewegung zwischen den beiden Kupplungsbauteilen 44', 46' und damit auch keine Relativbewegung zwischen der Spindelmutter 32' und dem Gehäuse 22'. Bei Überschreiten des Überlast-Drehmoments rücken die Rastelemente 48' dagegen aus den Nuten 84 aus, sodass zwischen Rastelementen 48' und Hülse 80 kein Kraftschluss mehr besteht. Das Gehäuse 22' kann dann relativ zur Spindelmutter 32' rotieren. Der Antriebsmotor 20 ist somit von der Spindelmutter 32' entkoppelt.

So lange das Antriebsmoment des Antriebsmotors 20 das Überlast-Drehmoment überschreitet überfahren die Rastelemente 48' die Nuten 84, ohne in diese einzurasten. Wird das Antriebsdrehmoment des Antriebsmotors 20 dagegen auf einen Wert unterhalb des Überlast-Drehmoments reduziert, so rasten die Rastelemente 48' von alleine wieder in die jeweiligen Nuten 84 ein, sodass das Gehäuse 22' und die Spindelmutter 32' dann wieder synchron drehen und die Antriebskraft des Antriebsmotors 20 auf die Spindelmutter 32' übertragen wird.

Ähnlich wie auch im ersten Ausführungsbeispiel lässt sich das Überlast-Drehmoment sowohl durch die Federkräfte, mit der die Rastelemente 48' in die Nuten 84 gedrückt werden, als auch durch die Formgebung der Nuten 84 und/oder Rastelemente 48' regulieren. Auch hier können die Nutflanken der Nuten 84 unterschiedlich geneigt sein, um den o.g. Effekt unterschiedlicher Axialkräfte in den entgegengesetzten Drehrichtungen zu realisieren.

Die Art der Verbindung des ersten Kupplungsbauteils 44' (Hülse 80) mit der Spindelmutter 32' sowie die Lagerung der Spindelmutter 32' innerhalb des Gehäuses 22' ist ebenso ähnlich wie gemäß des ersten Ausführungsbeispiels ausgestaltet. Die Spindelmutter 32', welche auch hier mit einem radial abstehenden Flansch 40' versehen ist, ist über Mitnehmerstifte 64' mit der Hülse 80 verbunden. Ein Ende der Mitnehmerstifte 64' ist jeweils in die Hülse 80 eingeschraubt. Das gegenüberliegende Ende der Mitnehmerstifte 64' ist jeweils in einer Bohrung angeordnet, welche in dem Flansch 40' der Spindelmutter 32' vorgesehen ist. Die Hohlräume zwischen den jeweiligen Bohrungen und den Mitnehmerstiften 64' sind vorzugsweise mit einer Vergussmasse ausgefüllt. Es sei jedoch darauf hingewiesen, dass eine Vielzahl anderer Verbindungsarten (kraft-, form- oder stoffschlüssig) zwischen Hülse 80 und Spindelmutter 32 möglich sind.

Die Lagerung der Spindelmutter 32' innerhalb des Gehäuses 22' erfolgt über zwei Lager 36', 42', welche in dem vorliegenden Ausführungsbeispiel beide als Wälzlager ausgestaltet sind und die Spindelmutter 32' sowohl radial als auch axial innerhalb des Gehäuses 22' lagern. Ein Gewindering 86, welcher an der Unterseite des Gehäuses 22' mit dem Gehäuse 22' verschraubt ist, erzeugt eine Vorspannung, die auf den inneren Teil des Spindelantriebs 30' wirkt, welcher die Lager 36', 42', die Hülse 80 und die Spindelmutter 32' umfasst.

An der Oberseite des Gehäuses 22' ist ein sogenannter Hohlwellenadapter 88 vorgesehen, welcher der Verbindung zwischen Spindelantrieb 30' und Antriebsmotor 20 dient.

Zusammenfassend lässt sich also feststellen, dass durch den in der erfindungsgemäße Presse zum Einsatz kommenden Spindelantrieb 30, 30' eine Möglichkeit bereitgestellt wird, eine Spindelmutter 32, 32' über eine Überlastkupplung 34, 34', welche unmittelbar in den Spindelantrieb 30, 30' integriert ist, mit einem Antriebsmotor 20 zu verbinden. Charakteristisch ist hierbei insbesondere die vergleichsweise geringe Baulänge von der durch Spindelmutter 32, 32', Überlastkupplung 34, 34' und Gehäuse 22, 22' gebildeten Einheit, welche nur unwesentlich größer ist als die Baulänge der Spindelmutter 32, 32' selbst. Ein weiterer Vorteil des in der erfindungsgemäße Presse zum Einsatz kommenden Spindelantriebs 30, 30' besteht darin, dass aufgrund der aufgezeigten konstruktiven Lösung das Massenträgheitsmoment auf ein Minimum reduziert ist. Dies ermöglicht hohe Winkelbeschleunigungen des Antriebsmotors 20.

Die Spindelmutter 32, 32', welche vorzugsweise mit einem radial abstehenden Flansch 40, 40' versehen ist, ist Bestandteil der hochintegrativen konstruktiven Lösung der Überlastkupplung 34, 34'. Die Überlastkupplung 34, 34' kann Axialkräfte mit hoher Steifigkeit übertragen. Aufgrund der asymmetrischen Formgebung der Nuten 56, 58, 84 können verschiedene Ausratsmomente für die beiden entgegengesetzten Drehrichtungen vorgesehen sein. Durch die Verwendung von reibungsarmen Radial- und Axiallagern ist ein automatisches Einrasten der Überlastkupplung 34, 34' beim Rückhub oder bei Reduzierung der Motordrehzahl gewährleistet. Zusätzliche Maßnahmen zur Wiederherstellung der Rastposition können entfallen.

Abschließend sei darauf hingewiesen, dass die Spindelmutter 32, 32' und die Spindel 24, 24' nicht notwendigerweise, wie in den vorliegenden Ausführungsbeispielen gezeigt, mit Gewinden versehen sein müssen. Das Spindelsystem kann beispielsweise auch als Kugelrollspindel oder als Rollengewindetrieb ausgestaltet sein, ohne den Rahmen der vorliegenden Erfindung, wie sie in den angehängten Ansprüchen definiert ist, zu verlassen.

## Patentansprüche

1. Presse (10), aufweisend:
- ein Motor (20);
- ein Spindelantrieb (30, 30'), der eine Spindel (24, 24') und eine Spindelmutter (32, 32'), welche auf der Spindel (24, 24') angeordnet ist, aufweist; und
- ein Gehäuse (22, 22'), welches die Spindelmutter (32, 32') umgibt;
**dadurch gekennzeichnet, dass** der Motor (20) das Gehäuse (22, 22') rotatorisch antreibt, und dass die Presse (10) eine Überlastkupplung (34, 34') aufweist, welche in dem Gehäuse (22, 22') angeordnet ist, wobei die Spindelmutter (32, 32') und das Gehäuse (22, 22') über die Überlastkupplung (34, 34') miteinander verbunden sind und die Überlastkupplung (34, 34') dazu eingerichtet ist, die Spindelmutter (32, 32') bei Überschreiten eines definierten, zwischen Spindelmutter (32, 32') und Gehäuse (22, 22') wirkenden Überlast-Drehmoments von dem Gehäuse (22, 22') drehmomentfrei zu trennen.

2. Presse (10) nach Anspruch 1, wobei der Motor (20) eine rotatorisch angetriebene Hohlwelle (21) aufweist, in der das Gehäuse (22, 22') angeordnet ist und mit der das Gehäuse (22, 22') drehfest verbunden ist.

3. Presse (10) nach einem der Ansprüche 1-2, wobei der Spindelantrieb (30, 30') ferner ein Radiallager (42, 42') zur radialen Lagerung der Spindelmutter (32, 32') im Gehäuse (22, 22') sowie ein Axiallager (36, 36') zur axialen Lagerung der Spindelmutter (32, 32') im Gehäuse (22, 22') aufweist.

4. Presse (10) nach Anspruch 3, wobei das Radiallager (42, 42') und das Axiallager (36, 36') zwischen der Spindelmutter (32, 32') und dem Gehäuse (22, 22') angeordnet sind.

5. Presse (10) nach einem der Ansprüche 1-4, wobei die Überlastkupplung (34, 34') ein erstes Kupplungsbauteil (44, 44'), welches drehfest mit der Spindelmutter (32, 32') verbunden ist, ein zweites Kupplungsbauteil (46, 46'), welches drehfest mit dem Gehäuse (22, 22') verbunden ist, sowie mehrere zwischen dem ersten und zweiten Kupplungsbauteil angeordnete Rastelemente (48, 48') aufweist, die bei Erreichen des Überlast-Drehmoments aus einer Rastposition durch eine Relativbewegung zu dem ersten und/oder zweiten Kupplungsbauteil (44, 44', 46, 46') ausrasten.

6. Presse (10) nach Anspruch 5, wobei das erste Kupplungsbauteil (44) eine erste Rastscheibe (50) mit mehreren ersten Nuten (56) aufweist, wobei das zweite Kupplungsbauteil (46) eine zweite Rastscheibe (52) mit mehreren zweiten Nuten (58) aufweist, und wobei die Rastelemente (48) in der Rastposition jeweils in einer der ersten Nuten (56) oder in einer der zweiten Nuten (58) angeordnet sind.

7. Presse (10) nach Anspruch 6, wobei gleichviele zweite Nuten (58) wie erste Nuten (56), aber doppelt so viele Rastelemente (48) wie erste Nuten (56) vorgehen sind.

8. Presse (10) nach Anspruch 6 oder 7, wobei die ersten Nuten (56) und die zweiten Nuten (58) jeweils asymmetrisch ausgestaltet sind und einander gegenüberliegende Nutflanken (72, 74, 76, 78) unterschiedlicher Neigung aufweisen.

9. Presse (10) nach einem der Ansprüche 6-8, wobei die zweite Rastscheibe (52) in Axialrichtung, also parallel zur Längsachse (38) der Spindel (24), federnd im Gehäuse (22) gelagert ist.

10. Presse (10) nach einem der Ansprüche 6-9, wobei das Gehäuse (22) mehrere Führungsnuten (68) aufweist, in die jeweils ein Steg (66) eingreift, der mit der zweite Rastscheibe (52) verbunden ist und radial von dieser auskragt, wobei die Stege (66) in den Führungsnuten (68) jeweils in Axialrichtung beweglich, jedoch in Umfangsrichtung fixiert sind.

11. Presse (10) nach Anspruch 5, wobei das zweite Kupplungsbauteil (46') mehrere Halterungen (82) aufweist, in denen jeweils eines der Rastelemente (48') federnd gelagert ist, und wobei das erste Kupplungsbauteil (44') mehrere Nuten (84) aufweist, in die die Rastelemente (48') in der Rastposition eingreifen.

12. Presse (10) nach Anspruch 11, wobei die Rastelemente (48') im Wesentlichen stabförmig sind und gegenüber den Halterungen (82) in Radialrichtung, also senkrecht zur Längsachse (38') der Spindel (24'), beweglich sind.

13. Presse (10) nach Anspruch 11 oder 12, wobei das erste Kupplungsbauteil (44') als Hülse (80) ausgestaltet ist, welche die Spindelmutter (32') zumindest teilweise umgibt und mit dieser drehfest verbunden ist.

## Claims

1. Press (10), comprising:
- a motor (20);
- a spindle drive (30, 30') which comprises a spindle (24, 24') and a spindle nut (32, 32') that is arranged on the spindle (24, 24'); and
- a housing (22, 22') that surrounds the spindle nut (32, 32');
**characterized in that** the motor (20) rotatably drives the housing (22, 22'), and that the press (10) comprises an overload clutch (34, 34') that is arranged in the housing (22, 22'), wherein the spindle nut (32, 32') and the housing (22, 22') are connected to each other via the overload clutch (34, 34'), and the overload clutch (34, 34') is configured to separate the spindle nut (32, 32') from the housing (22, 22') torque-free upon exceeding a predefined overload torque acting between the spindle nut (32, 32') and the housing (22, 22').

2. Press (10) according to claim 1, wherein the motor (20) comprises a rotatably driven hollow shaft (21) in which the housing (22, 22') is arranged and to which the housing (22, 22') is connected in a torque-proof manner.

3. Press (10) according to one of claims 1-2, wherein the spindle drive (30, 30') further comprises a radial bearing (42, 42') for radial mounting of the spindle nut (32, 32') in the housing (22, 22') and an axial bearing (36, 36') for axial mounting of the spindle nut (32, 32') in the housing (22, 22').

4. Press (10) according to claim 3, wherein the radial bearing (42, 42') and the axial bearing (36, 36') are arranged between the spindle nut (32, 32') and the housing (22, 22').

5. Press (10) according to one of claims 1-4, wherein the overload clutch (34, 34') comprises a first clutch component (44, 44'), which is connected to the spindle nut (32, 32') in a torque-proof manner, a second clutch component (46, 46'), which is connected to the housing (22, 22') in a torque-proof manner, and a plurality of latching elements (48, 48') arranged between the first and the second clutch components, which latching elements disengage from a latching position by a relative movement to the first and/or second clutch component (44, 44', 46, 46') upon reaching the overload torque.

6. Press (10) according to claim 5, wherein the first clutch component (44) comprises a first latching disc (50) with a plurality of first grooves (56), wherein the second clutch component (46) comprises a second latching disc (52) with a plurality of second grooves (58), and wherein each of the latching elements (48) in the latching position is arranged in one of the first grooves (56) or in one of the second grooves (58).

7. Press (10) according to claim 6, with as many second grooves (58) as first grooves (56), but twice as many latching elements (48) as first grooves (56) are provided.

8. Press (10) according to claim 6 or 7, wherein each of the first grooves (56) and the second grooves (58) is asymmetrically designed and comprises opposing groove flanks (72, 74, 76, 78) of different inclination.

9. Press (10) according to one of claims 6-8, wherein the second latching disc (52) is resiliently mounted in the housing (22) in the axial direction, i.e. parallel to the longitudinal axis (38) of the spindle (24).

10. Press (10) according to one of claims 6-9, wherein the housing (22) comprises a plurality of guide grooves (68), in each of which a web (66) engages, which is connected to the second latching disc (52) and projects radially therefrom, wherein each of the webs (66) is movable in the guide grooves (68) in the axial direction but fixed in the circumferential direction.

11. Press (10) according to claim 5, wherein the second clutch component (46') comprises a plurality of holders (82) in each of which one of the latching elements (48') is resiliently mounted, and wherein the first clutch component (44') comprises a plurality of grooves (84) in which the latching elements (48') engage in the latching position.

12. Press (10) according to claim 11, wherein the latching elements (48') are substantially rod-shaped and are movable relative to the holders (82) in the radial direction, i.e. perpendicular to the longitudinal axis (38') of the spindle (24').

13. Press (10) according to claim 11 or 12, wherein the first clutch component (44') is configured as a sleeve (80) which surrounds the spindle nut (32') at least partially and is connected to the latter in a torque-proof manner.

## Revendications

1. Presse (10), comprenant:
- un moteur (20) ;
- un entraînement à broche (30, 30'), qui comprend une broche (24, 24') et un écrou de broche (32, 32'), lequel est disposé sur la broche (24, 24') ; et
- un boîtier (22, 22'), lequel entoure l'écrou de broche (32, 32') ;
**caractérisée en ce que** le moteur (20) entraîne le boîtier (22, 22') en rotation, et **en ce que** la presse (10) comprend un embrayage de surcharge (34, 34'), lequel est disposé dans le boîtier (22, 22'), l'écrou de broche (32, 32') et le boîtier (22, 22') étant reliés l'un à l'autre par le biais de l'embrayage de surcharge (34, 34') et l'embrayage de surcharge (34, 34') étant conçu pour séparer l'écrou de broche (32, 32') du boîtier (22, 22') de manière dépourvue de couple en cas de dépassement d'un couple de surcharge défini agissant entre l'écrou de broche (32, 32') et le boîtier (22, 22').

2. Presse (10) selon la revendication 1, dans laquelle le moteur (20) comprend un arbre creux (21) entraîné en rotation, dans lequel le boîtier (22, 22') est disposé et auquel le boîtier (22, 22') est relié de manière solidaire en rotation.

3. Presse (10) selon l'une des revendications 1 et 2, dans laquelle l'entraînement à broche (30, 30') comprend en outre un palier radial (42, 42') pour le montage radial de l'écrou de broche (32, 32') dans le boîtier (22, 22') ainsi qu'un palier axial (36, 36') pour le montage axial de l'écrou de broche (32, 32') dans le boîtier (22, 22').

4. Presse (10) selon la revendication 3, dans laquelle le palier radial (42, 42') et le palier axial (36, 36') sont disposés entre l'écrou de broche (32, 32') et le boîtier (22, 22').

5. Presse (10) selon l'une des revendications 1 à 4, dans laquelle l'embrayage de surcharge (34, 34') comprend un premier composant d'embrayage (44, 44'), lequel est relié de manière solidaire en rotation à l'écrou de broche (32, 32'), un deuxième composant d'embrayage (46, 46'), lequel est relié de manière solidaire en rotation au boîtier (22, 22'), ainsi que plusieurs éléments d'encliquetage (48, 48') disposés entre le premier et le deuxième composant d'embrayage, lesquels sont dégagés d'une position d'encliquetage par un mouvement relatif par rapport au premier et/ou au deuxième composant d'embrayage (44, 44', 46, 46') lorsque le couple de surcharge est atteint.

6. Presse (10) selon la revendication 5, dans laquelle le premier composant d'embrayage (44) comprend un premier disque d'encliquetage (50) doté de plusieurs premières rainures (56), dans laquelle le deuxième composant d'embrayage (46) comprend un deuxième disque d'encliquetage (52) doté de plusieurs deuxièmes rainures (58), et dans laquelle les éléments d'encliquetage (48) dans la position d'encliquetage sont disposés respectivement dans l'une des premières rainures (56) ou dans l'une des deuxièmes rainures (58).

7. Presse (10) selon la revendication 6, dans laquelle autant de deuxièmes rainures (58) que de premières rainures (56) sont prévues, mais deux fois plus d'éléments d'encliquetage (48) que de premières rainures (56) sont prévus.

8. Presse (10) selon la revendication 6 ou 7, dans laquelle les premières rainures (56) et les deuxièmes rainures (58) sont configurées respectivement de manière asymétrique et comprennent des flancs de rainures en regard (72, 74, 76, 78) d'inclinaisons différentes.

9. Presse (10) selon l'une des revendications 6 à 8, dans laquelle le deuxième disque d'encliquetage (52) est monté de manière élastique dans le boîtier (22) dans la direction axiale, c'est-à-dire parallèlement à l'axe longitudinal (38) de la broche (24).

10. Presse (10) selon l'une des revendications 6 à 9, dans laquelle le boîtier (22) comprend plusieurs rainures de guidage (68), dans lesquelles vient en prise respectivement une nervure (66) qui est reliée au deuxième disque d'encliquetage (52) et fait saillie radialement à partir de celui-ci, dans laquelle les nervures (66) sont mobiles dans les rainures de guidage (68) respectivement dans la direction axiale, mais sont fixées dans la direction périphérique.

11. Presse (10) selon la revendication 5, dans laquelle le deuxième composant d'embrayage (46') comprend plusieurs éléments de retenue (82) dans lesquels l'un des éléments d'encliquetage (48') est respectivement monté de manière élastique, et dans laquelle le premier composant d'embrayage (44') comprend plusieurs rainures (84) dans lesquelles les éléments d'encliquetage (48') viennent en prise dans la position d'encliquetage.

12. Presse (10) selon la revendication 11, dans laquelle les éléments d'encliquetage (48') sont sensiblement en forme de barres et sont mobiles par rapport aux éléments de retenue (82) dans la direction radiale, c'est-à-dire perpendiculairement à l'axe longitudinal (38') de la broche (24').

13. Presse (10) selon la revendication 11 ou 12, dans laquelle le premier composant d'embrayage (44') est configuré sous forme de douille (80), laquelle entoure au moins partiellement l'écrou de broche (32') et est reliée de manière solidaire en rotation à celui-ci.
